# EUROPEAN PATENT SPECIFICATION

(11) **EP 3 695 046 B1**
(45) Date of publication and mention of the grant of the patent: **28.10.2026**
(21) Application number: 18783464.3
(22) Date of filing: 08.10.2018
(51) Int. Cl.: D06F 95/00

(54) **A MACHINE FOR THE PROCESSING OF LINEN ITEMS IN AN INDUSTRIAL LAUNDRY, A METHOD FOR OPERATING THE MACHINE, AND AN INDUSTRIAL LAUNDRY**
EINE MASCHINE ZUR VERARBEITUNG VON LEINSTOFFEN IN EINER INDUSTRIELLEN WÄSCHEREI, EIN VERFAHREN ZUM BETRIEB DER MASCHINE UND EINE INDUSTRIELLE WÄSCHEREI
MACHINE DE TRAITEMENT D'ARTICLES DE LINGE DANS UN BLANCHIMENT INDUSTRIEL, PROCÉDÉ DE FONCTIONNEMENT DE LA MACHINE ET BLANCHIMENT INDUSTRIEL

(30) Priority: 13.10.2017 DK PA201770778
(43) Date of publication of application: 19.08.2020
(73) Proprietor: Jensen Denmark A/S, DK-3700 Rønne (DK)
(72) Inventor: CORDUA, Kim, 3700 Rønne (DK); LUNDT, Morten, 3700 Rønne (DK)
(74) Representative: Zacco Denmark A/S
(86) International application number: PCT/EP2018/077293
(87) International publication number: WO 2019/072751

(56) References cited:
- EP-A1- 0 272 368
- EP-A1- 2 947 198
- US-A- 5 440 810

## Description

### Summary

The present invention finds particular use in an after-the-washers section 1 of an industrial laundry, which section is for the processing of individualized and washed table or bed linen or similar laundry conveyed to a spreader.

Operations prior to the insertion of the laundry items into common spreaders typically involve picking up each linen item manually by a person who must first locate two adjacent corners of the linen item and then insert each corner into a respective one of two clamping devices mounted onto a carrier movably supported by an overhead conveyor for movement through the laundry to the spreader. This procedure is time consuming.

The present invention as defined by claims 1 and 8 aims at solving the aforementioned problem by providing a machine and a method suitable for operations in connection with conventional spreaders, such as in an industrial laundry as defined by claim 6.

Specifically, the machine of the invention has a transfer mechanism for receiving, reorienting and transferring a linen item from a loader to a movable linen carrier, and comprising a carriage, a drive for moving the carriage between a loading position and a discharge position, the carriage including a frame structure with two spaced apart clamping structures, each being rotationally connected to the frame structure, each clamping structure comprising two spaced apart activatable clamps, and actuators for said rotation and said activation of the clamps.

Preferably, the clamping structures are each configurable to assume i) a first configuration for receiving and holding a linen item corner portion extending in a generally vertical plane and extending between the two spaced apart clamps, and ii) a second configuration upon said rotation with said linen item corner portion extending generally horizontally and extending between the two spaced apart clamps.

In a preferred embodiment the machine includes a linen item loader of the type including two opposed conveyor belts allowing the linen item to be drawn through the loader from a feeding side thereof, whereby two corners at a rear edge of the linen item are the last linen item portions discharged from the loader opposite the feeding side, thereby allowing corner portions of the linen item to be presented to the clamps while extending in the generally vertical plane.

EP272368 and US5440810 both disclose methods and apparatuses for gripping corners of cloth.

### Brief description of the drawings

Fig. 1A shows, seen from above, an exemplary layout of an after-the-washers section 1 of an industrial laundry,
Fig. 1B shows an example of the layout of station B in a prior art after-the washers section,
Fig. 2A is a perspective view of a machine of the invention,
Fig. 2B shows an overhead conveyor carrier with two clamping devices,
Figs. 3A and 3B show perspective front and rear views of an embodiment of a transfer mechanism of the invention,
Figs. 4A-E show a carriage part of the transfer mechanism with four clamps mounted thereon in various configurations,
Figs. 5A-F show various stages during operation of the transfer mechanism, and
Figs. 6A and 6B show a correcting mechanism in two positions.

### Detailed description

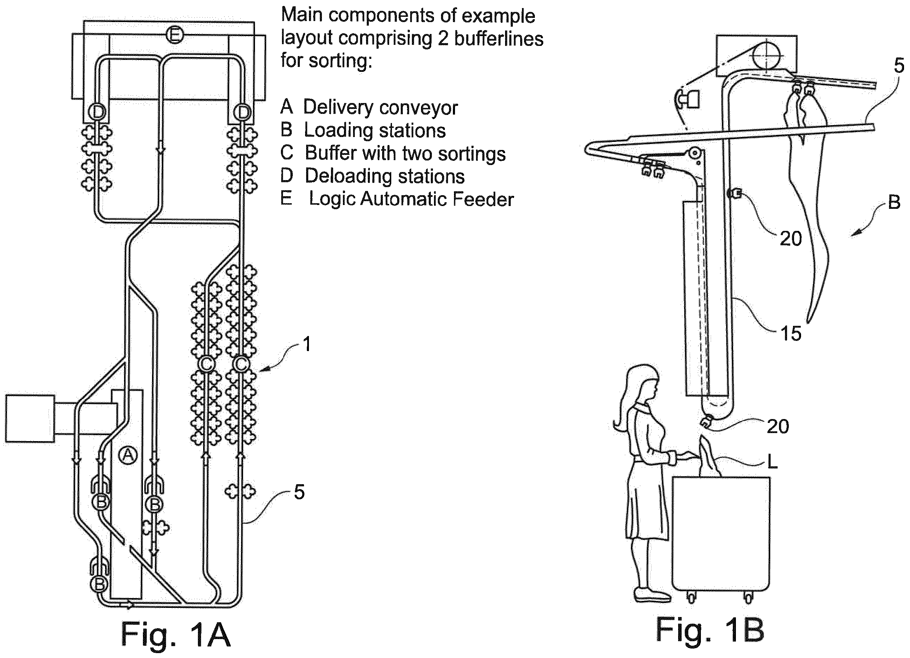

The invention will now be explained in more detail below by reference first to fig. 1A which shows, seen from above, an exemplary layout of an after-the-washers section 1 of an industrial laundry, which section is for the processing of individualized and washed table or bed linen or similar laundry, in the following referred to as linen items. Such an after-the washers section 1 typically includes a first station A to which washed linen items are delivered, a buffer station C for storing washed linen items hanging each suspended from an overhead conveyer 5, and a spreader E to which the hanging linen items are delivered one by one and by means of which each linen item is first spread out and then fed, lying flat on a conveyor, to an ironer or other equipment (not shown in fig. 1A).

At station B each linen item is normally picked up manually by a human operator who first locates two adjacent corners of the linen item. Each corner is then inserted by the operator into a respective one of two clamping devices mounted onto a carrier movably supported by the overhead conveyor 5 for movement through the section 1. Generally, the overhead conveyor 5 supports a relatively large number of such carriers that each have two clamping devices, see by way of example EP 3202970.

Fig. 1B shows an example of the layout of station B in a prior art after-the washers section 1, numeral 15 referring to a loop part of the overhead conveyor 5 that extends to the operating level of the operator, at which level the corners of the linen items L are inserted manually into the aforementioned clamping devices mounted in pairs on a carrier 20 that moves along the overhead conveyor 5.

WO2016/162334 discloses a spreader for spreading out linen items. The spreader has a loader for automatically locating the corners of a washed linen item when a front edge of the linen item is introduced on a feeding side of the loader between two opposed running conveyor belts of the loader. When the linen item is drawn through the loader by the two opposed conveyor belts, the two corners at the rear edge of the linen item will be the last linen item portions discharged from the loader opposite the feeding side, thereby allowing each one of the two adjacent rear edge linen item corners to be presented in a well-defined manner to a respective transfer clamp configured for gripping around that corner. The linen item is then transferred to a pair of spreader clamps for the subsequent spreading out of the linen item by moving the two corners apart using the spreader clamps.

The spreader of WO2016/162334 differs from the more common type of spreaders where each of two adjacent corners of the linen item is presented to a corresponding spreader clamp by a transfer gripper that includes two spaced apart clamps together holding on to one elongated corner portion of a certain length.

In the aforementioned more common type of spreader the elongated corner portions are presented to the spreader clamps in a configuration where they extend generally horizontally, permitting for each corner portion a respective spreader clamp to enter in between the two spaced apart clamps holding the corner portion to receive and hold on to the linen item. Then the two spreader clamps move apart to spread out the linen item. Normally, for presenting the linen items in this manner to the spreader clamps has each corner portion of the linen item previously been introduced manually between pairs of jaws where each pair of jaws defines one of two spaced apart clamps of the transfer gripper.

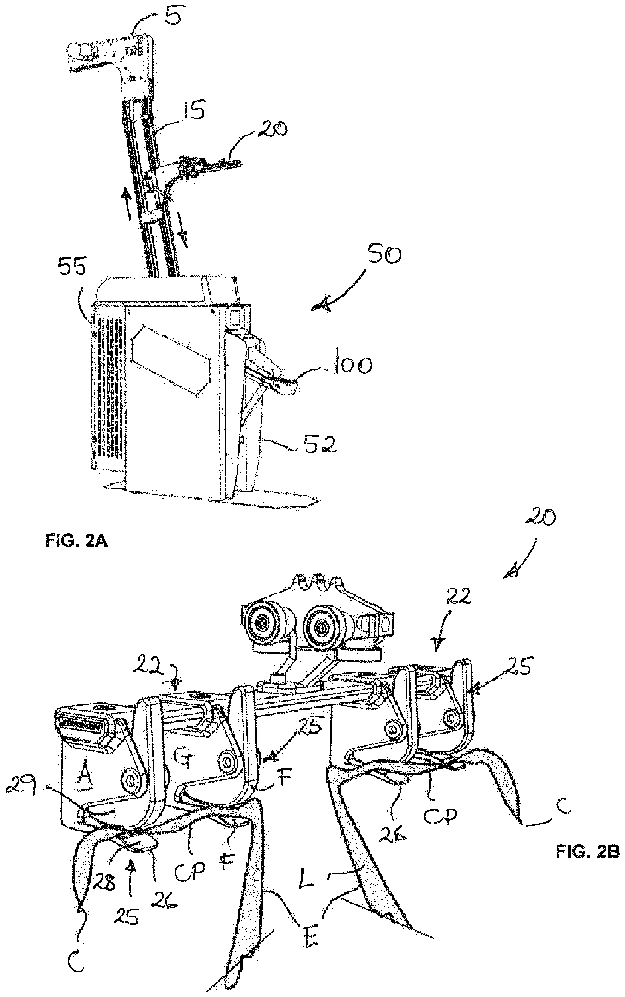

The present invention is concerned with a machine 50 as shown in fig. 2A which simplifies the work at station B and which allows for the subsequent spreading out of pieces of linen, such as when using a spreader of the aforementioned more common type where the linen items must be presented to the spreader clamps in a condition where corner portions thereof extend generally horizontally.

Fig. 2B shows an overhead conveyor 5 carrier 20 with two clamping devices 22, each clamping device 22 comprising two clamps 25 each defined by two opposed jaws 28, 29. The carrier 20 carries a linen item L having a front edge E; as shown, near each adjacent corner C of the linen item L is an elongated corner portion CP held by a respective clamping device 22 such that each corner portion CP extends generally horizontally between two associated clamps 25 of the clamping device 22. In operation of the machine 50 linen items L are delivered to the carrier 20 in a manner allowing insertion of the linen items L between the jaws 28, 29 of the clamps 25 as shown in fig. 2B such that the linen L items may be conveyed onwards with horizontally extending corner portions CP to a spreader of the aforementioned common type in an after-the washers section 1.

The opposed jaws 28, 29 may preferably be of the spring loaded type opening up when a force is applied onto the face F of one of the jaws 29, such as when a linen L item is pushed into the gap between the opposed faces F of the jaws 28, 29. By adjusting the spring load relatively heavy linen L items may be reliably suspended in the shown manner from the carrier 20 as it is conveyed from the machine 50, through the section 1 towards the buffer station C. It is noted that the frictional force holding the corner portions CP in place may still be overcome by applying a sufficient force onto the linen item L oriented along the general direction of the elongated corner portions CP.

The machine 50 has a front side 52 with a loader 100 which may be of the aforementioned type discussed in the context of WO2016/162334, and preferably including two opposed conveyor belts. To the loader 100 an operator may manually supply individual linen items L. A loop part 15 of the overhead conveyor 5 shown only partially in fig. 2A extends to a rear part 55 of the machine 50 and serves to convey carriers 20 to and away from the machine 50, such as shown by way of example along the direction of the arrows indicated in fig. 2A. Upon arrival of a carrier 20 into correct position at the rear part 55 a transfer mechanism to be discussed below receives, reorients and transfers a linen item L from the loader 100 to the carrier 20. The linen item L is received between the jaws 28, 29 of the carrier 20 through movement of the carrier 20 and/or a dedicated movement of the transfer mechanism 200.

An embodiment of the invention where a linen item L is transferred to the carrier 20 and received between the jaws 28, 29 through a movement only of the transfer mechanism will be discussed below, the transfer mechanism being designated generally the numeral 200.

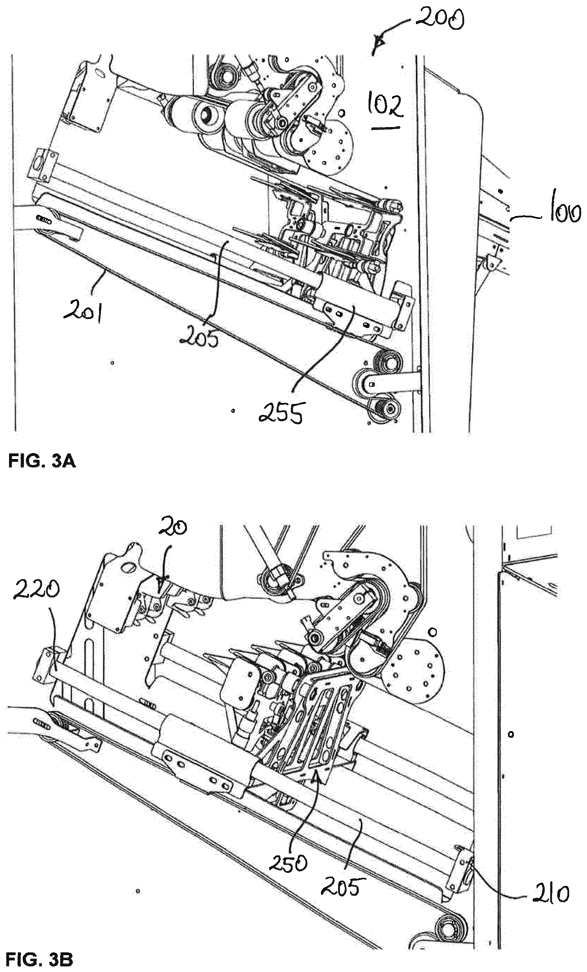

Figs. 3A and 3B show perspective front and rear views of an embodiment of the transfer mechanism 200 of the invention, located at the rear side of a front wall 102 part of a housing enclosing the transfer mechanism 200. A portion of the loader 100 is visible on the front side of the front wall 102.

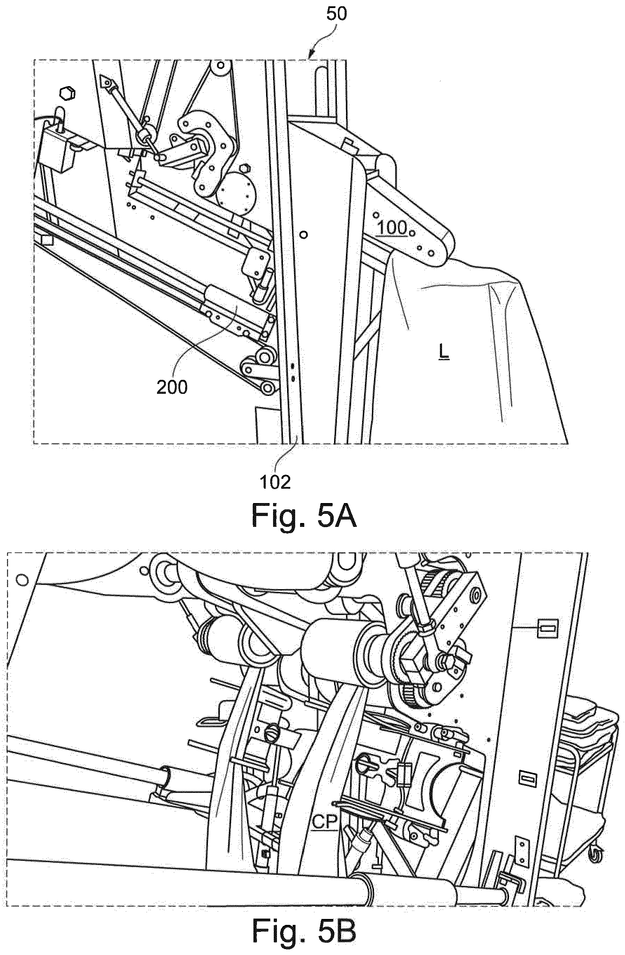

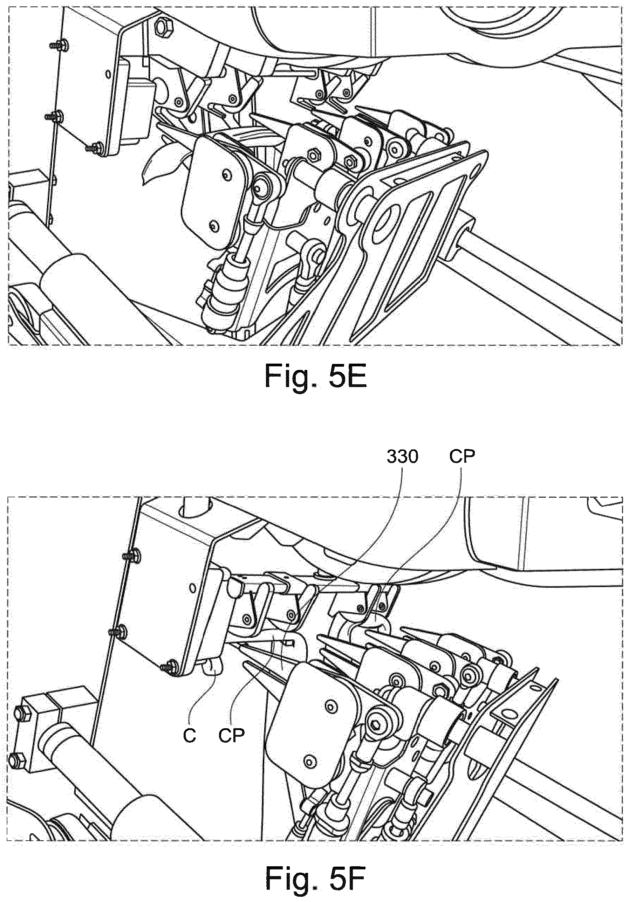

The transfer mechanism 200 generally includes a carriage 250 and an elongated guiding structure 205 onto which the carriage 250 is mounted so as to be movable by the action of a chain drive or other drive away from a retracted position close to the front wall 102 as shown in fig. 3A towards a carrier 20 located in an elevated waiting position opposite the front wall 102 of the housing, as shown in fig. 3B. The carriage 250 moves along a course defined by the orientation of the guiding structure 205. In performing this movement the carriage 250 temporarily stops at a loading position shown in fig. 5B where the transfer mechanism receives a linen item L.

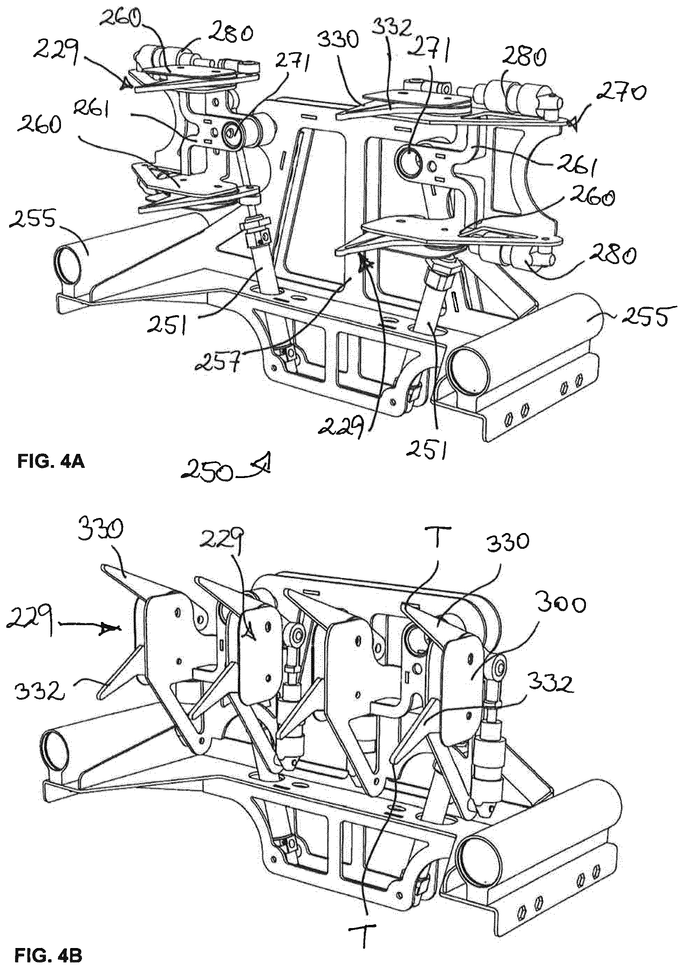

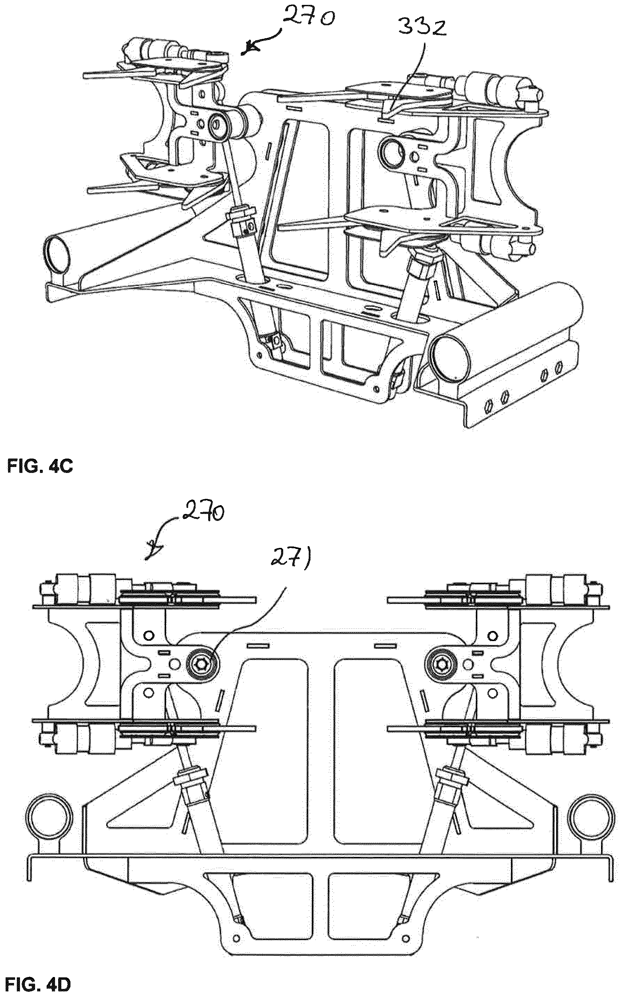

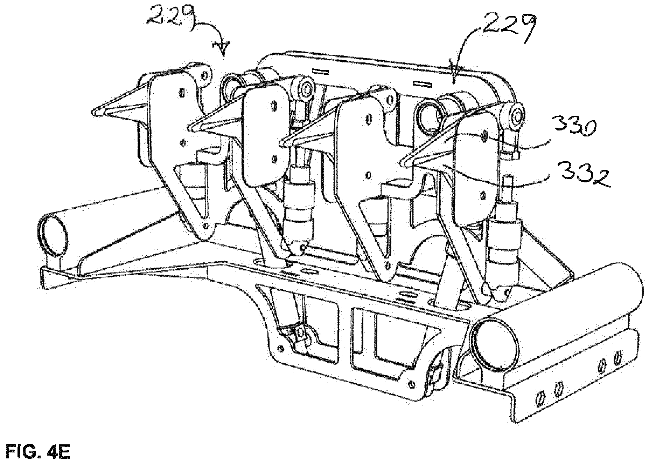

Figs. 4A-E show the carriage 250 with four clamps 229 mounted thereon in various configurations, fig. 4C illustrating the clamp 229 configuration shown in fig. 3A, and fig. 4E illustrating the clamp 229 configuration shown in fig. 3B. Fig. 4D shows the carriage with the clamp configuration of fig. 4C, seen in a front view. To provide an easy overview figs. 3A, 3B, and 4A-4E show the various configurations of the transfer mechanism without illustrating at the same time a linen item L, the transfer of a linen item L being illustrated generally in figs. 5A-F.

Turning to fig. 4A the carriage 250 is shown as comprising a frame structure 257 supporting two spaced apart clamping structures 270 as well as two opposite tubular structures 255 receiving the elongated guiding structure 205 as shown in fig. 3A. The two clamping structures 270 comprise, in the shown embodiment, the same components and are each pivotally connected to the frame structure 257 through a respective turning axle 271 joined to a base plate 261 of each clamping structure 270. A respective actuator 251 connected on the one hand to the base plate 261 and on the other hand to the frame structure 257 may be activated for rotating a corresponding clamping structure 270 relative to the frame structure 257 between a first position shown in fig. 4A and 4C and a second position shown in figs. 4B and 4E; the axis of rotation is preferably aligned with the guiding structure 205/the direction along which the carriage 250 moves.

Each clamping structure 270 comprises in addition a pair of opposed side plates 260, 300 extending perpendicularly to the base plate 261 and to each of which side plate 260, 300 is mounted a pair of jaws 330, 332 defining a respective clamp 229. Also connected to each side plate 260, 300 is an actuator 280 for opening and closing a corresponding clamp 229, i.e. for moving the jaws 330, 332 towards and away from each other. Any number of actuators 280 may of course be used for actuation of the four shown clamps 229 of the two clamping structures 270.

Operation of the transfer mechanism 200 will now be explained with reference to figs. 5A-5E.

Fig. 5A shows the carriage 250 in the aforementioned retracted position and with the two clamping structures 270 having previously been rotated to the position shown in fig. 4C, with the jaws 330, 332 being spread apart as shown. At this time a linen item L is loaded at the front side of the machine 50. Activation of the loader 100 leads to the linen item L being drawn into the machine 50 such that two elongated corner portions CP eventually appear inside the machine 50, hanging suspended from the loader 100 and with the remaining part (not shown) of the linen item L lying on the bottom of the machine 50.

At the same time as the corner portions CP appear inside the machine 50 are they presented to the carriage 250 being in the configuration of fig. 4C in that the carriage 250 has moved forward from the retracted position to reach the aforementioned loading position also shown in fig. 5B. In this position of the carriage 250 is each one of the two elongated corner portions CP extending in the gap between the spread apart jaws 330, 332 of the two pairs of clamps 229 of a corresponding clamping structure 270. As can be seen the corner portions CP at this time and in the shown embodiment extend in a generally vertical plane, possibly oriented at a small angle to the vertical, corresponding to an inclined position of the carriage 250 reflecting a correspondingly inclined extension of the guiding structure 205.

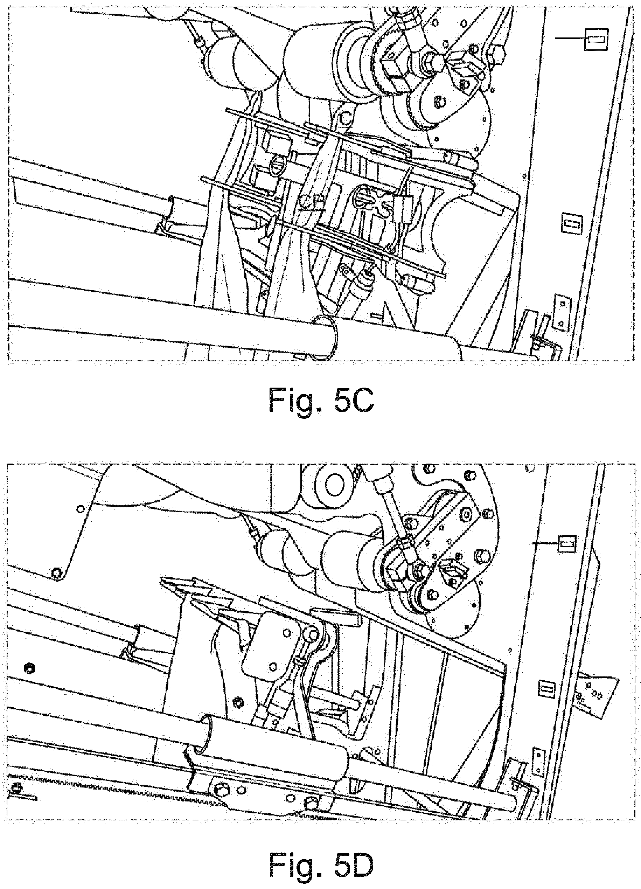

Next, i.e. around the time where the corner portions CP leave the loader 100, see fig. 5C are the four actuators 280 activated to close the clamps 229 by moving the jaws 330, 332 together, thereby holding on to the corner portions CP.

The carriage 250 is now moved further forwards along the guiding structure 205 while at the same time each of the two clamping structures 229 are rotated into the position shown in figs. 4E and 5D, thereby rotating the two corner portions CP so as to extend essentially horizontally. As shown in fig. 5E carriage 250 in a continuous movement then moves further on towards a discharge position at a carrier 20 located at the end of the guiding structure 205, with the tips 26 of the clamps 25 thereof facing the corner portions CP. By a relative movement, preferably as shown by a final movement of the carriage 20 to an end position, with the tips T of the jaws 330, 332 on the carriage 250 having passed beyond the tips 26 of the jaws 28, 29 on the carrier 20 are the corner portions CP pressed into the gap between the jaws 28, 29 of the clamps 25 of the carrier 20, and are retained in the position shown in fig. 2B by the spring loading of the clamps 25. In one embodiment a portion, such as the shown upwardly extending portion, of one of the jaws 29 may be pressed on mechanically on arriving to the machine 50, so as to open up the aforementioned gap. The clamps 229 of the carriage 250 are then operated by the actuators 280 to release their grip on the corner portions CP following which the carriage 250 is moved back to the original, retracted position while the clamping structures 270 are each at the same time rotated back to the position shown in fig. 5B by the associated actuators 251.

With the linen item L now being held properly is the carrier 20 moved onwards along the overhead conveyor 5.

It will be understood by the person skilled in the art that activation of the various elements of the transfer mechanism may involve a controller, such as a PC, relying on sensors indicating the presence of linen items L at relevant positions.

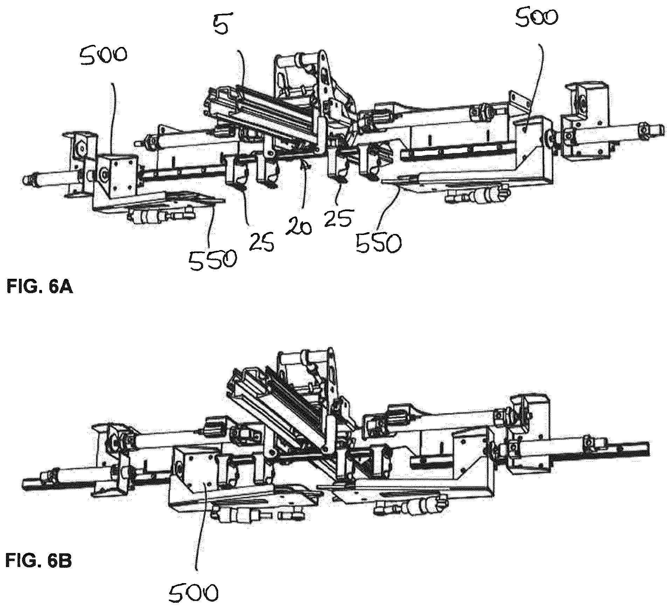

Finally, a correcting mechanism 500 shown in figs. 6A and 6B may be formed as an integral part of the machine 50 or located as a separate part downstream towards the spreader E, for applying a force onto the linen item L in the general direction of the elongated corner portions CP to the effect that the material of the linen item L slips slightly between the jaws 28, 29 of the clamps 25 until each of the two corners C of linen item L is aligned with or essentially aligned with the sides of the two outermost clamps A, 25 on the carrier 20. Such an alignment may be preferred to ensure that the spreader clamps of the downstream spreader E may receive and engage the linen item L at a position closest to the corners C, when entering the gap G between two adjacent clamps 25 on the carrier 20. The alignment is achieved by two opposed carriages 550 placed on a respective side of the conveyor 5 and movable to and from each other, compare figs. 6A and 6B, when a carrier 20 with clamps 25 carrying a linen item L (not shown) is positioned between the two opposed carriages. Clamps 25 mounted to the opposed carriages 550 grip around a hanging portion of the linen item L held by the clamps 25 and provide that the corner portions CP received by the clamps 25 slip between the jaws as explained above upon further movement of the carriages 550 until the corners C are aligned with the sides of the clamps 25.

While above the invention has been described in the context of a machine having elements in the form of only one carriage including only two clamping devices, a higher number of such elements may be provided within the scope of the appended claims; specifically, more than two clamps may be provided for each clamping device, depending on the configuration of the carriers 20.

## Claims

1. A machine (50) for the processing of linen items (L) in an industrial laundry (1), such as for receiving, reorienting and transferring a linen item (L) from a loader (100) to a movable linen carrier (20), the machine having a transfer mechanism (200) comprising:
a carriage (250),
a drive (201) for moving said carriage (250) between a loading position and a discharge position,
**characterised in that**
said carriage (250) including a frame structure (257) with
i) two spaced apart clamping structures (270), each being rotationally connected to the frame structure (257), each clamping structure (270) comprising two spaced apart activatable clamps (229), and
ii) actuators (251) for rotating said clamping structures (270) relative to said frame structure (257) and actuators (280) for opening and closing said clamps (229).

2. The machine of claim 1, the axis of rotation of said clamping structures (270) being aligned with the direction along which the carriage (250) moves.

3. The machine of claim 1 or 2, said actuators (251) being activatable to rotate said clamping structures (270) to a first configuration wherein for each clamping structure (270) one clamp (229) is above the other.

4. The machine of claim 1 or 2 or 3, said machine (50) including a linen item (L) loader (100) including two opposed conveyor belts for drawing linen items (L) through the loader (100) from a feeding side thereof, whereby two corners (C) at a rear edge (E) of the linen item (L) are the last linen item (L) portions discharged from the loader (100) opposite said feeding side, to thereby present elongated corner portions (CP) of said linen item (L) to said clamps (229) while hanging suspended from said loader (100) extending in generally vertical plane.

5. The machine (50) of any of the previous claims, including an elongated guiding structure (205) carrying said transfer mechanism (200).

6. An industrial laundry (1) including:
the machine (50) according to any of the previous claims,
a linen item spreader (E) including linen item spreader clamps,
an overhead conveyor (5) with linen item carriers (20),
said overhead conveyor (5) including a portion (15) arranged at said discharge position of said machine (50),
said carriers (20) including two clamping devices (22), each clamping device (22) comprising two clamps (25), each defined by two opposed jaws (28, 29), said clamping devices (22) each being for holding an elongated corner portion (CP) of a linen item (L) such that the corner portion (CP) extends generally horizontally, said opposed jaws (28, 29) being spring loaded and opening up when a force is applied onto the face (F) of one of said jaws (29) when a linen item (L) is pushed in between opposed faces (F) of said jaws (28, 29).

7. The industrial laundry of the previous claim, including a correcting mechanism (500) for applying a force onto said linen item (L) in the general direction of said elongated corner portions (CP) to the effect that the material of the linen item (L) slips slightly between said jaws (28, 29) of said clamps (25) of said clamping devices until each of the two corners (C) of said linen item (L) is aligned with or essentially aligned with sides of the two outermost clamps (25) of said carrier (20).

8. A method of operating a machine (50) for the processing of linen items (L) in an industrial laundry (1), with a transfer mechanism (200) comprising:
a carriage (250),
a drive (201) for moving said carriage (250) between a loading position and a discharge position,
said carriage (250) including a frame structure (257) with two spaced apart clamping structures (270), each being rotationally connected to the frame structure (257),
each clamping structure (270) comprising two spaced apart activatable clamps (229), and
actuators (251, 280) for said rotation and said activation of said clamps (229),
said clamping structures (270) each being configurable to assume i) a first configuration for receiving and holding an elongated linen item (L) corner portion (CP) extending in a generally vertical plane and extending between said two spaced apart clamps (229), and ii) a second configuration upon said rotation with said elongated linen item (L) corner portion (CP) extending generally horizontally and extending between said two spaced apart clamps (229),
**said method comprising the steps of:**
rotating the two clamping structures (270) to said first configuration with said clamps (229) being open,
loading a linen item (L) such that two elongated corner portions (CP) hang suspended,
moving said carriage (250) to a position where each one of said two elongated corner portions (CP) is received by said two clamps (229) of a respective one of said clamping structure (270) with each of said elongated corner portions (CP) extending between said two clamps (229) of a clamping structure (270),
closing said clamps (229) to hold on to said corner portions (CP),
rotating said clamping structures (270) to reorient said corner portions (CP) to extend generally horizontally between said two spaced apart clamps (229) of said clamping structure (270), and
moving said carriage (250) to a discharge position.

9. The method of claim 8, the axis of rotation of said clamping structures (270) being aligned with the direction along which the carriage (250) moves.

10. The method of claim 8 or 9, wherein at said discharge position is a carrier (20) including two clamping devices (22), each clamping device (22) comprising two clamps (25), each defined by two opposed jaws (28, 29), said clamping devices (22) each being for holding an elongated corner portion (CP) of a linen item (L) such that the corner portion (CP) extends generally horizontally, said opposed jaws (28, 29) being spring loaded and opening up when a force is applied onto the face (F) of one of said jaws (29), said method comprising the step of pushing said corner portion (CP) of said linen item (L) in between opposed faces (F) of said jaws (28, 29).

11. The method of claim 8 or 9 or 10, said machine (50) further including a linen item (L) loader (100) including two opposed conveyor belts, said method comprising i) drawing said linen item (L) through said loader (100) from a feeding side thereof, whereby two corners (C) at a rear edge (E) of the linen item (L) are the last linen item (L) portions discharged from the loader (100) opposite said feeding side, and ii) presenting elongated corner portions (CP) of said linen item (L) to said clamps (229) while extending in said generally vertical plane.

12. The method of claim 8 or 9 or 10 or 11, wherein for each clamping structure (270) one clamp (229) is above the other in said first configuration.

## Patentansprüche

1. Maschine (50) zur Verarbeitung von Wäschestücken (L) in einer industriellen Wäscherei (1), beispielsweise zum Aufnehmen, Neuausrichten und Übertragen eines Wäschestücks (L) von einem Lader (100) zu einem beweglichen Wäschestückträger (20), wobei die Maschine einen Transfermechanismus (200) umfasst, der umfasst:
einen Schlitten (250),
einen Antrieb (201) zum Bewegen des Schlittens (250) zwischen einer Ladeposition und einer Entladeposition,
**dadurch gekennzeichnet, dass** der Schlitten (250) eine Rahmenstruktur (257) mit
i) zwei beabstandeten Klemmstrukturen (270), die jeweils drehbar mit der Rahmenstruktur (257) verbunden sind, wobei jede Klemmstruktur (270) zwei beabstandete aktivierbare Klemmen (229) umfasst, und
ii) Aktuatoren (251) zum Drehen der Klemmstrukturen (270) relativ zur Rahmenstruktur (257) und Aktuatoren (280) zum Öffnen und Schließen der Klemmen (229) umfasst.

2. Maschine nach Anspruch 1, wobei die Drehachse der Klemmstrukturen (270) mit der Richtung ausgerichtet ist, entlang derer sich der Schlitten (250) bewegt.

3. Maschine nach Anspruch 1 oder 2, wobei die Aktuatoren (251) aktivierbar sind, um die Klemmstrukturen (270) in eine erste Konfiguration zu drehen, in der für jede Klemmstruktur (270) eine Klemme (229) über der anderen ist.

4. Maschine nach Anspruch 1 oder 2 oder 3, wobei die Maschine (50) einen Lader (100) für Wäschestücke (L) umfasst, der zwei gegenüberliegende Förderbänder zum Durchziehen von Wäschestücken (L) durch den Lader (100) von einer Zuführseite davon umfasst, wobei zwei Ecken (C) an einer Hinterkante (E) des Wäschestücks (L) die letzten vom Lader (100) auf der der Zuführseite gegenüberliegenden Seite ausgegebenen Abschnitte von Wäschestücken (L) sind, um dadurch verlängerte Eckabschnitte (CP) des Wäschestücks (L) den Klemmen (229) zu präsentieren, während sie vom Lader (100) in einer im Wesentlichen vertikalen Ebene hängend erstrecken.

5. Maschine (50) nach einem der vorhergehenden Ansprüche, umfassend eine längliche Führungsstruktur (205), die den Transfermechanismus (200) trägt.

6. Industrielle Wäscherei (1), umfassend:
die Maschine (50) nach einem der vorhergehenden Ansprüche,
einen Wäschestückspreizer (E) mit Wäschestückspreizerklemmen,
einen Deckenförderer (5) mit Wäschestückträgern (20),
wobei der Deckenförderer (5) einen Abschnitt (15) umfasst, der an der Entladeposition der Maschine (50) angeordnet ist,
wobei die Träger (20) zwei Klemmvorrichtungen (22) umfassen, wobei jede Klemmvorrichtung (22) zwei Klemmen (25) umfasst, die jeweils durch zwei gegenüberliegende Backen (28, 29) definiert sind, wobei die Klemmvorrichtungen (22) jeweils zum Halten eines verlängerten Eckabschnitts (CP) eines Wäschestücks (L) ausgelegt sind, so dass sich der Eckabschnitt (CP) im Wesentlichen horizontal erstreckt, wobei die gegenüberliegenden Backen (28, 29) federbelastet sind und sich öffnen, wenn eine Kraft auf die Fläche (F) einer der Backen (29) ausgeübt wird, wenn ein Wäschestück (L) zwischen gegenüberliegende Flächen (F) der Backen (28, 29) gedrückt wird.

7. Industrielle Wäscherei nach dem vorhergehenden Anspruch, umfassend einen Korrekturmechanismus (500) zum Ausüben einer Kraft auf das Wäschestück (L) in der allgemeinen Richtung der verlängerten Eckabschnitte (CP), so dass das Material des Wäschestücks (L) leicht zwischen den Backen (28, 29) der Klemmen (25) der Klemmvorrichtungen gleitet, bis jede der zwei Ecken (C) des Wäschestücks (L) mit den Seiten der zwei äußersten Klemmen (25) des Trägers (20) ausgerichtet oder im Wesentlichen ausgerichtet ist.

8. Verfahren zum Betreiben einer Maschine (50) zur Verarbeitung von Wäschestücken (L) in einer industriellen Wäscherei (1), mit einem Transfermechanismus (200), der umfasst:
einen Schlitten (250),
einen Antrieb (201) zum Bewegen des Schlittens (250) zwischen einer Ladeposition und einer Entladeposition,
wobei der Schlitten (250) eine Rahmenstruktur (257) mit zwei beabstandeten Klemmstrukturen (270) umfasst, die jeweils drehbar mit der Rahmenstruktur (257) verbunden sind,
wobei jede Klemmstruktur (270) zwei beabstandete aktivierbare Klemmen (229) umfasst, und
Aktuatoren (251, 280) für die Drehung und die Aktivierung der Klemmen (229),
wobei jede der Klemmstrukturen (270) konfigurierbar ist, um i) eine erste Konfiguration zum Aufnehmen und Halten eines verlängerten Eckabschnitts (CP) des Wäschestücks (L) anzunehmen, der sich in einer im Wesentlichen vertikalen Ebene erstreckt und sich zwischen den zwei beabstandeten Klemmen (229) erstreckt, und ii) eine zweite Konfiguration nach der Drehung anzunehmen, bei der sich der verlängerte Eckabschnitt (CP) des Wäschestücks (L) im Wesentlichen horizontal und zwischen den zwei beabstandeten Klemmen (229) erstreckt,
**wobei das Verfahren die Schritte umfasst:**
Drehen der zwei Klemmstrukturen (270) in die erste Konfiguration bei geöffneten Klemmen (229),
Laden eines Wäschestücks (L), so dass zwei verlängerte Eckabschnitte (CP) herabhängen,
Bewegen des Schlittens (250) in eine Position, in der jeder der zwei verlängerten Eckabschnitte (CP) von den zwei Klemmen (229) einer jeweiligen der Klemmstruktur (270) aufgenommen wird, wobei sich jeder der verlängerten Eckabschnitte (CP) zwischen den zwei Klemmen (229) einer Klemmstruktur (270) erstreckt,
Schließen der Klemmen (229), um die Eckabschnitte (CP) zu halten,
Drehen der Klemmstrukturen (270), um die Eckabschnitte (CP) neu auszurichten, so dass sie sich im Wesentlichen horizontal zwischen den zwei beabstandeten Klemmen (229) der Klemmstruktur (270) erstrecken, und
Bewegen des Schlittens (250) in eine Entladeposition.

9. Verfahren nach Anspruch 8, wobei die Drehachse der Klemmstrukturen (270) mit der Richtung ausgerichtet ist, entlang derer sich der Schlitten (250) bewegt.

10. Verfahren nach Anspruch 8 oder 9, wobei an der Entladeposition ein Träger (20) vorhanden ist, der zwei Klemmvorrichtungen (22) umfasst, wobei jede Klemmvorrichtung (22) zwei Klemmen (25) umfasst, die jeweils durch zwei gegenüberliegende Backen (28, 29) definiert sind, wobei die Klemmvorrichtungen (22) jeweils zum Halten eines verlängerten Eckabschnitts (CP) eines Wäschestücks (L) ausgelegt sind, so dass sich der Eckabschnitt (CP) im Wesentlichen horizontal erstreckt, wobei die gegenüberliegenden Backen (28, 29) federbelastet sind und sich öffnen, wenn eine Kraft auf die Fläche (F) einer der Backen (29) ausgeübt wird, wobei das Verfahren den Schritt des Drückens des Eckabschnitts (CP) des Wäschestücks (L) zwischen gegenüberliegende Flächen (F) der Backen (28, 29) umfasst.

11. Verfahren nach Anspruch 8 oder 9 oder 10, wobei die Maschine (50) ferner einen Lader (100) für Wäschestücke (L) mit zwei gegenüberliegenden Förderbändern umfasst, wobei das Verfahren i) das Durchziehen des Wäschestücks (L) durch den Lader (100) von einer Zuführseite davon, wobei zwei Ecken (C) an einer Hinterkante (E) des Wäschestücks (L) die letzten vom Lader (100) auf der der Zuführseite gegenüberliegenden Seite ausgegebenen Abschnitte des Wäschestücks (L) sind, und ii) das Präsentieren verlängerter Eckabschnitte (CP) des Wäschestücks (L) den Klemmen (229), während sie sich in der im Wesentlichen vertikalen Ebene erstrecken, umfasst.

12. Verfahren nach Anspruch 8 oder 9 oder 10 oder 11, wobei für jede Klemmstruktur (270) eine Klemme (229) in der ersten Konfiguration über der anderen ist.

## Revendications

1. Machine (50) de traitement d'articles de linge (L) dans une blanchisserie industrielle (1), par exemple pour recevoir, réorienter et transférer un article de linge (L) depuis un chargeur (100) jusqu'à un transporteur d'articles de linge mobile (20), la machine présentant un mécanisme de transfert (200) comprenant :
un chariot (250),
un entraînement (201) pour déplacer ledit chariot (250) entre une position de chargement et une position de déchargement,
**caractérisée en ce que** ledit chariot (250) comprend une structure de châssis (257) dotée de :
i) deux structures de serrage (270) espacées l'une de l'autre, chacune étant reliée à rotation à la structure de châssis (257), chaque structure de serrage (270) comprenant deux pinces activables (229) espacées l'une de l'autre, et
ii) des actionneurs (251) pour mettre en rotation lesdites structures de serrage (270) par rapport à ladite structure de châssis (257) et des actionneurs (280) pour ouvrir et fermer lesdites pinces (229).

2. Machine selon la revendication 1, dans laquelle l'axe de rotation desdites structures de serrage (270) est aligné sur la direction de déplacement du chariot (250).

3. Machine selon la revendication 1 ou 2, dans laquelle lesdits actionneurs (251) sont activables pour mettre en rotation lesdites structures de serrage (270) jusqu'à une première configuration dans laquelle, pour chaque structure de serrage (270), une pince (229) est située au-dessus de l'autre.

4. Machine selon la revendication 1, 2 ou 3, dans laquelle ladite machine (50) comprend un chargeur (100) d'articles de linge (L) comprenant deux bandes transporteuses opposées pour tirer des articles de linge (L) à travers le chargeur (100) depuis un côté d'alimentation de ce dernier, de sorte que deux coins (C) au niveau d'un bord arrière (E) de l'article de linge (L) soient les dernières parties de l'article de linge (L) à être déchargées du chargeur (100) à l'opposé dudit côté d'alimentation, pour présenter ainsi des parties de coin allongées (CP) dudit article de linge (L) auxdites pinces (229) tandis qu'il est suspendu audit chargeur (100) et s'étend dans un plan globalement vertical.

5. Machine (50) selon l'une quelconque des revendications précédentes, comprenant une structure de guidage allongée (205) portant ledit mécanisme de transfert (200).

6. Blanchisserie industrielle (1) comprenant :
la machine (50) selon l'une quelconque des revendications précédentes,
un dispositif d'étendage d'articles de linge (E) comprenant des pinces de dispositif d'étendage,
un convoyeur aérien (5) doté de transporteurs d'articles de linge (20),
ledit convoyeur aérien (5) comprenant une partie (15) agencée au niveau de ladite position de déchargement de ladite machine (50),
lesdits transporteurs (20) comprenant deux dispositifs de serrage (22), chaque dispositif de serrage (22) comprenant deux pinces (25), chacune définie par deux mâchoires opposées (28, 29), lesdits dispositifs de serrage (22) servant chacun à maintenir une partie de coin allongée (CP) d'un article de linge (L) de sorte que la partie de coin (CP) s'étende globalement horizontalement, lesdites mâchoires opposées (28, 29) étant rappelées par ressort et s'ouvrant lorsqu'une force est appliquée sur la face (F) de l'une desdites mâchoires (29) lorsqu'un article de linge (L) est poussé entre des faces opposées (F) desdites mâchoires (28, 29).

7. Blanchisserie industrielle selon la revendication précédente, comprenant un mécanisme de correction (500) destiné à appliquer une force sur ledit article de linge (L) dans la direction générale desdites parties de coin allongées (CP) afin que la matière de l'article de linge (L) glisse légèrement entre lesdites mâchoires (28, 29) desdites pinces (25) desdits dispositifs de serrage jusqu'à ce que chacun des deux coins (C) dudit article de linge (L) soit aligné ou essentiellement aligné avec les côtés des deux pinces (25) situées le plus à l'extérieur dudit transporteur (20).

8. Procédé d'exploitation d'une machine (50) de traitement d'articles de linge (L) dans une blanchisserie industrielle (1), présentant un mécanisme de transfert (200) comprenant :
un chariot (250),
un entraînement (201) pour déplacer ledit chariot (250) entre une position de chargement et une position de déchargement,
ledit chariot (250) comprenant une structure de châssis (257) dotée de deux structures de serrage (270) espacées l'une de l'autre, chacune étant reliée à rotation à la structure de châssis (257),
chaque structure de serrage (270) comprenant deux pinces activables (229) espacées l'une de l'autre, et
des actionneurs (251, 280) pour ladite rotation et ladite activation desdites pinces (229),
lesdites structures de serrage (270) étant chacune configurables pour adopter i) une première configuration pour recevoir et maintenir une partie de coin allongée (CP) d'un article de linge (L) s'étendant dans un plan globalement vertical et s'étendant entre lesdites deux pinces (229) espacées l'une de l'autre, et ii) une seconde configuration à l'issue de ladite rotation avec ladite partie de coin allongée (CP) d'un article de linge (L) s'étendant globalement horizontalement et s'étendant entre lesdites deux pinces (229) espacées l'une de l'autre,
**ledit procédé comprenant les étapes consistant à :**
mettre en rotation les deux structures de serrage (270) jusqu'à ladite première configuration, lesdites pinces (229) étant ouvertes,
charger un article de linge (L) de sorte que deux parties de coin allongées (CP) soient suspendues,
déplacer ledit chariot (250) jusqu'à une position où chacune desdites deux parties de coin allongées (CP) est reçue par lesdites deux pinces (229) d'une structure de serrage respective (270) parmi lesdites structures de serrage, chacune desdites parties de coin allongées (CP) s'étendant entre lesdites deux pinces (229) d'une structure de serrage (270),
fermer lesdites pinces (229) pour maintenir lesdites parties de coin (CP),
mettre en rotation lesdites structures de serrage (270) pour réorienter lesdites parties de coin (CP) afin qu'elles s'étendent globalement horizontalement entre lesdites deux pinces (229) espacées l'une de l'autre de ladite structure de serrage (270), et
déplacer ledit chariot (250) jusqu'à une position de déchargement.

9. Procédé selon la revendication 8, dans lequel l'axe de rotation desdites structures de serrage (270) est aligné sur la direction de déplacement du chariot (250).

10. Procédé selon la revendication 8 ou 9, dans lequel, au niveau de ladite position de déchargement, se trouve un transporteur (20) comprenant deux dispositifs de serrage (22), chaque dispositif de serrage (22) comprenant deux pinces (25), chacune définie par deux mâchoires opposées (28, 29), lesdits dispositifs de serrage (22) servant chacun à maintenir une partie de coin allongée (CP) d'un article de linge (L) de sorte que la partie de coin (CP) s'étende globalement horizontalement, lesdites mâchoires opposées (28, 29) étant rappelées par ressort et s'ouvrant lorsqu'une force est appliquée sur la face (F) de l'une desdites mâchoires (29), ledit procédé comprenant l'étape consistant à pousser ladite partie de coin (CP) dudit article de linge (L) entre des faces opposées (F) desdites mâchoires (28, 29).

11. Procédé selon la revendication 8, 9 ou 10, dans lequel ladite machine (50) comprend en outre un chargeur (100) d'articles de linge (L) comprenant deux bandes transporteuses opposées, ledit procédé comprenant les étapes consistant à i) tirer ledit article de linge (L) à travers ledit chargeur (100) depuis un côté d'alimentation de ce dernier, de telle sorte que deux coins (C) au niveau d'un bord arrière (E) de l'article de linge (L) soient les dernières parties de l'article de linge (L) à être déchargées du chargeur (100) à l'opposé dudit côté d'alimentation, et ii) présenter des parties de coin allongées (CP) dudit article de linge (L) auxdites pinces (229) tout en s'étendant dans ledit plan globalement vertical.

12. Procédé selon la revendication 8, 9, 10 ou 11, dans lequel, pour chaque structure de serrage (270), une pince (229) est située au-dessus de l'autre dans ladite première configuration.
